# EUROPÄISCHE PATENTSCHRIFT

(11) **EP 3 243 372 B1**
(45) Veröffentlichungstag und Bekanntmachung des Hinweises auf die Patenterteilung: **25.09.2019**
(21) Anmeldenummer: 17159476.5
(22) Anmeldetag: 07.03.2017
(51) Int. Cl.: A01D 34/28, A01D 41/14, A01D 75/28

(54) **VERFAHREN ZUM EINSTELLEN EINES SCHNITTWINKELS EINES AN EINER SELBSTFAHRENDEN ERNTEMASCHINE ANGEORDNETEN VORSATZGERÄTES**
METHOD FOR ADJUSTING AN ANGLE OF CUTTERS OF AN ATTACHMENT FIXED ON A SELF-PROPELLED HARVESTING MACHINE
PROCÉDÉ DE RÉGLAGE D'UN ANGLE DE COUPE D'UN OUTIL AVANT DISPOSÉ SUR UNE MOISSONNEUSE AUTOMOBILE

(30) Priorität: 12.05.2016 DE 102016108755
(43) Veröffentlichungstag der Anmeldung: 15.11.2017
(73) Patentinhaber: CLAAS Selbstfahrende Erntemaschinen GmbH, 33428 Harsewinkel (DE)
(72) Erfinder: Burbank, Martin, 48231 Warendorf (DE); Uesbeck, Tobias, 48599 Gronau-Epe (DE); Dammann, Martin, 33428 Harsewinkel (DE)
(74) Vertreter: CLAAS Gruppe

(56) Entgegenhaltungen:
- EP-A1- 0 887 009
- EP-A1- 1 520 465
- EP-B1- 1 145 619

## Beschreibung

Die vorliegende Erfindung betrifft ein Verfahren zum Einstellen eines Schnittwinkels eines an einer selbstfahrenden Erntemaschine, vorzugsweise einem Mähdrescher, angeordneten Vorsatzgerätes, wobei das Vorsatzgerät mit dem Boden einen Schnittwinkel einschließt, und die Erntemaschine zumindest eine Hangausgleichseinrichtung zum Verschwenken eines Maschinengehäuses der Erntemaschine, und zumindest einen Hubzylinder zum Verschwenken eines Schrägförderers der Erntemaschine umfasst, wobei das Vorsatzgerät am Schrägförderer angeordnet ist. Die vorliegende Erfindung betrifft weiterhin eine selbstfahrende Erntemaschine zur Durchführung des Verfahrens.

Erntegut wird herkömmlich mit einem Vorsatzgerät geerntet, das einen Mähbalken mit Messern zum insbesondere bodennahen Abschneiden des Ernteguts aufweist. Bei flach am Boden angeordnetem Erntegut besteht die Möglichkeit, dass das Erntegut nicht vom Vorsatzgerät erfasst, und dadurch nicht abgeschnitten und geerntet wird. Um das Erntegut optimal abschneiden und in das Vorsatzgerät einer selbstfahrenden Erntemaschine einziehen zu können, muss das Vorsatzgerät einen definierten Schnittwinkel zum Boden aufweisen. Der Schnittwinkel sollte auf das zu erntende Erntegut abgestimmt sein. Eine Abweichung von dem Schnittwinkel kann einen reduzierten Ernteertrag zur Folge haben, weil nicht das gesamte Erntegut vom Vorsatzgerät erfasst wird. Des Weiteren können Bestandteile des Vorsatzgerätes, wie zum Beispiel Ährenheber oder die Messer, bei Bodenkontakt beschädigt oder in ihrer Funktion beeinflusst werden. Deshalb ist eine präzise Schnittwinkeleinstellung des Vorsatzgerätes erforderlich.

Die Druckschrift EP 1 145 619 B1 offenbart einen Schwenkadapter zwischen dem Vorsatzgerät und dem Schrägförderer einer Erntemaschine, welcher einen Schwenkrahmen umfasst, der einerseits mit dem Vorsatzgerät und andererseits mit dem Schrägförderer um eine Achse in Fahrtrichtung drehbeweglich verbunden ist. Am Hang sind das Vorsatzgerät gegenüber dem Schwenkadapter, und der Schwenkadapter gegenüber dem Schrägförderer um die Achse verschwenkbar. Ein Durchlaufbereich zwischen dem Vorsatzgerät und einem Kipprahmen des Schwenkadapters ist dadurch am Hang mehrfach gestuft ausgebildet, so dass auch bei einem großen Drehwinkel des Vorsatzgerätes gegenüber dem Schrägförderer ein gleichbleibender Erntegutdurchsatz ohne Erntegutstau erreichbar ist. Dafür weist die Erntemaschine zwei Hubzylinder auf, welche zwischen dem Schrägförderer und dem Schwenkadapter angeordnet sind. Die Hubzylinder ermöglichen das Einstellen des Schnittwinkels durch Verschwenken des Vorsatzgerätes.

Die Druckschrift EP 1 321 026 B1 offenbart eine selbstfahrende Erntemaschine mit einer Hangausgleichseinrichtung, die an einander zugewandten Seiten der Radgetriebe jeweils einen Formkörper aufweist, in dem eine Schwenkeinrichtung für den Hangausgleich angeordnet ist. Mittels der Schwenkeinrichtung, die einen Radstellzylinder und ein Portalgetriebe umfasst, kann die Front des Maschinengehäuses der Erntemaschine ein- oder beidseitig angehoben oder abgesenkt werden, wodurch eine querseitige Hangneigung ausgeglichen werden kann. Am Formkörper sind zudem Hubzylinder angeordnet, mit denen der Schrägförderer quer zur Fahrtrichtung verschwenkt werden kann.

Bei starr am Schrägförderer angeordnetem Vorsatzgerät führt das Verschwenken des Schrägförderers zu einer gleichzeitigen Änderung des Schnittwinkels und der Höhe des Vorsatzgerätes gegenüber dem Boden. Die EP 1 145 619 B1 offenbart eine selbstfahrende Erntemaschine mit einem am Schrägförderer angeordneten Vorsatzgerät, die einerseits einen Hubzylinder zum Verschwenken des Vorsatzgerätes um eine in Fahrtrichtung ausgerichtete Längsachse aufweist, und andererseits einen Hubzylinder zum Verschwenken des Schwenkadapters um eine quer zur Fahrtrichtung ausgerichtete Querachse. Bei dieser Erntemaschine ist daher das Vorsatzgerät um die Querachse gegenüber dem Schrägförderer verschwenkbar. Die zusätzlichen Hubzylinder erhöhen jedoch die Kosten und den konstruktiven Aufwand.

Aus der EP 0 887 009 A1 ist ein Verfahren zum Betreiben einer Erntemaschine gemäß dem Oberbegriff des Anspruches 1 bekannt.

Es ist deshalb Aufgabe der Erfindung, ein Verfahren sowie eine Erntemaschine zur Durchführung des Verfahrens zu schaffen, die das Einstellen des Schnittwinkels des Vorsatzgerätes relativ zum Boden kostengünstig, insbesondere ohne zusätzliche Hubzylinder, ermöglicht.

Die Aufgabe wird mit einem Verfahren mit den Merkmalen des unabhängigen Anspruchs 1, und mit einer Erntemaschine mit den Merkmalen des unabhängigen Anspruchs 10 gelöst. Vorteilhafte Ausführungsformen sind den abhängigen Ansprüchen entnehmbar.

Dafür wird ein Verfahren zum Einstellen eines Schnittwinkels eines an einer selbstfahrenden Erntemaschine angeordneten Vorsatzgerätes geschaffen. Die selbstfahrende Erntemaschine
ist bevorzugt ein Mähdrescher. Es sind aber auch andere selbstfahrende Erntemaschinen mit an die Erntemaschine angeordneten Vorsatzgeräten, insbesondere Feldhäcksler, bevorzugt. Dabei schließt das Vorsatzgerät mit dem Boden den Schnittwinkel ein. Zudem umfasst die Erntemaschine zumindest eine Hangausgleichseinrichtung zum Hangneigungsausgleich, bei dem das Maschinengehäuse der Erntemaschine verschwenkt wird, und zumindest einen Hubzylinder zum Verschwenken eines Schrägförderers der Erntemaschine, an dem das Vorsatzgerät angeordnet ist. Das Vorsatzgerät kann als ein Teil der Erntemaschine, oder als ein separates Vorsatzgerät ausgebildet und an die Erntemaschine angeschlossen sein.

Das Verfahren zeichnet sich dadurch aus, dass die Hangausgleichseinrichtung in einer ersten Regelstrategie und in einer weiteren Regelstrategie betrieben wird, wobei sie in der ersten Regelstrategie zum Hangneigungsausgleich, und in der weiteren Regelstrategie zur Einstellung des Schnittwinkels genutzt wird.

Der Schnittwinkel erstreckt sich dabei in einem ebenen Gelände orthogonal zu einer Frontachse. Er wird vom Vorsatzgerät und vom Boden eingeschlossen. Ein Schnittwinkel parallel zum Boden hat einen Betrag von 0°. Ein vom Boden ausgehend in Fahrtrichtung geöffneter Schnittwinkel weist einen Betrag größer als 0°, und ein vom Boden ausgehend gegen die Fahrtrichtung geöffneter Schnittwinkel weist einen Betrag kleiner als 0° auf. Die Höhe des Vorsatzgerätes und eine Schnitthöhe werden im Folgenden synonym verwendet. Die erste Regelstrategie wird vorzugsweise zum Ausgleich einer querseitigen Hangneigung genutzt. Sie sieht ein Verschwenken des Maschinengehäuses mittels der Hangausgleichseinrichtung vor. Dabei wird das Maschinengehäuse bei einem querseitigen Gefälle des Bodens im Wesentlichen horizontal ausgerichtet. Hierzu umfasst die Hangausgleichseinrichtung eine Schwenkeinrichtung mit einem Portalgetriebe und einem diesem zugeordneten Radstellzylinder. Besonders bevorzugt umfasst sie an gegenüberliegenden Seiten der Frontachse der Erntemaschine jeweils eine Schwenkeinrichtung mit einem Portalgetriebe und einem diesem zugeordneten Radstellzylinder. Die Schwenkeinrichtungen sind besonders bevorzugt jeweils an Achsenden der Frontachse angeordnet.

Bei einer Hangausgleichseinrichtung mit nur einer Schwenkeinrichtung ist diese bevorzugt frontseitig der Erntemaschine etwa mittig zwischen den Rädern angeordnet. Ebenfalls bevorzugt ist eine Hangausgleichseinrichtung, die neben Schwenkeinrichtungen an der Frontachse weitere Schwenkeinrichtungen, insbesondere an weiteren Achsen der Erntemaschine, aufweist.

Eine solche Hangausgleichseinrichtung ermöglicht den Ausgleich der querseitigen Hangneigung bevorzugt durch Druckbeaufschlagung oder -Entlastung zumindest eines Radstellzylinders. Dabei wird durch die Druckbeaufschlagung oder-Entlastung des zumindest einen Radstellzylinders ein Rad, welches an demjenigen Portalgetriebe angeordnet ist, dem der Radstellzylinder zugeordnet ist, um die Frontachse verschwenkt. Dadurch ändert sich der Radabstand dieses Rades zum Maschinengehäuse. Das Maschinengehäuse wird dabei dort angehoben oder abgesenkt. Auf diese Weise kann das Maschinengehäuse im Wesentlichen horizontal ausgerichtet werden.

Bei Druckbeaufschlagung oder - Entlastung wird eine Zylinderstange des Radstellzylinders aus- oder eingefahren. Eine Ausfahrweite der Zylinderstange wird im Folgenden als Zylinderstellung bezeichnet. Vorzugsweise wird die Zylinderstellung des Radstellzylinders beim Hangneigungsausgleich aus einer Ausgangsstellung in mindestens eine weitere Zylinderstellung verändert.

Der Ausgleich einer querseitigen Hangneigung wird daher bevorzugt durch das Beaufschlagen oder Entlasten eines Radstellzylinders an einem Achsende, oder ebenfalls bevorzugt durch ungleiches Beaufschlagen oder Entlasten beider Radstellzylinder an gegenüberliegenden Achsenden, insbesondere der Frontachse, bewirkt.

Der Schrägförderer ist bevorzugt am Maschinengehäuse angeordnet oder bildet einen Teil desselben. Das Vorsatzgerät ist bevorzugt am Schrägförderer angeordnet. Beim querseitigen Hangausgleich bleibt die Schnitthöhe des Vorsatzgerätes vorzugsweise unverändert.

Um zu gewährleisten, dass das Vorsatzgerät bei einem Ausgleich einer querseitigen Hangneigung möglichst parallel zum Boden ausgerichtet ist, ist um eine in Fahrtrichtung ausgerichtete Längsachse drehbar am Schrägförderer angeordnet ist. Es kann daher während oder nach dem Ausgleich der querseitigen Hangneigung um die Längsachse verschwenkt werden. In eine Querrichtung quer zur Fahrtrichtung ist das Vorsatzgerät hingegen drehfest in einem Montagewinkel, am Schrägförderer angeordnet.

Eine Einstellung des Schnittwinkels und gleichzeitig der Höhe des Vorsatzgerätes wird durch Druckbeaufschlagung- oder -Entlastung des den Schrägförderer verschwenkenden zumindest einen Hubzylinders bewirkt.

Ein erstes Ende des Hubzylinders ist dafür vorzugsweise am Schrägförderer angeordnet. Ein zweites Ende des Hubzylinders ist vorzugsweise am Maschinengehäuse oder einer Schwenkeinrichtung angeordnet. Der Schrägförderer ist bevorzugt um eine Schwenkachse schwenkbar. Die Schwenkachse durchsetzt das Maschinengehäuse bevorzugt in Querrichtung quer zur Fahrtrichtung. Besonders bevorzugt wird der Schrägförderer mittels zweier Hubzylinder verschwenkt.

Beim oder nach dem Hangausgleich, der in unebenem Gelände oder am Hang ausgeführt wird, kann das Vorsatzgerät daher durch Verschwenken um die Längsachse bodenparallel und/oder durch Verschwenken des Schrägförderers um die Schwenkachse in einem schnitthöhenabhängigen Schnittwinkel ausgerichtet werden.

Die weitere Regelstrategie sieht hingegen gezielt eine schnitthöhenunabhängige oder eine im Wesentlichen schnitthöhenunabhängige Einstellung des Schnittwinkels unter Ausnutzung der Hangausgleichseinrichtung vor. Dabei wird die Hangausgleichseinrichtung bevorzugt sowohl für eine Veränderung der Höhe des Vorsatzgerätes als auch für eine Veränderung des Schnittwinkels genutzt. Dies wird bevorzugt durch Druckbeaufschlagung oder - Entlastung des zumindest einen Radstellzylinders bewirkt. Dabei wird das Maschinengehäuse angehoben oder abgesenkt. Dadurch wird nicht nur die Höhe des Vorsatzgerätes, sondern gleichzeitig zudem der Schnittwinkel des Vorsatzgerätes zum Boden verstellt.

Dafür umfasst die Hangausgleichseinrichtung den zumindest einen Radstellzylinder und das zumindest eine Portalgetriebe. Bevorzugt werden die Radstellzylinder an den gegenüberliegenden Achsenden der Frontachse genutzt. Diese werden weiterhin bevorzugt in gleichem Ausmaß mit Druck beaufschlagt oder entlastet. Dadurch hebt oder senkt sich die Front des Mähdreschers gleichmäßig auf beiden Seiten an oder ab. Das Maschinengehäuse wird dabei um die Hinterachse verschwenkt. Aufgrund der Ausmaße der Erntemaschine und demgegenüber kleinen Schnittwinkeländerungen bleibt das Maschinengehäuse dabei dennoch nahezu horizontal ausgerichtet, so dass eine einwandfreie Funktion der Arbeitsaggregate weiterhin sichergestellt ist.

Lediglich zur Feineinstellung des Schnittwinkels ist es in einem weiteren Verfahrensschritt der weiteren Regelstrategie weiterhin bevorzugt, dass das Vorsatzgerät mittels des mindestens einen Hubzylinders verschwenkt wird. Der Schrägförderer wird dafür bevorzugt durch Druckbeaufschlagung oder - Entlastung des zumindest einen Hubzylinders, insbesondere von einer Grundstellung in eine Endstellung, verschwenkt. Auch dabei werden der Schnittwinkel und die Höhe des Vorsatzgerätes gleichzeitig verstellt. Die Höhe des Maschinengehäuses wird dabei aber nicht verändert.

Mittels Durchführung beider Verfahrensschritte zum schnitthöhenabhängigen Einstellen des Schnittwinkels der weiteren Regelstrategie, ist der Schnittwinkel schnitthöhenunabhängig oder im Wesentlichen schnitthöhenunabhängig einstellbar.

Die Reihenfolge beider Verfahrensschritte der weiteren Regelstrategie ist, insbesondere in Abhängigkeit von dem einzustellenden Schnittwinkel, auch umkehrbar. So wird bei einer Reduzierung des Schnittwinkels bevorzugt zuerst das Maschinengehäuse, insbesondere an der Frontachse, von einer Ausgangshöhe ausgehend bis auf eine Endhöhe angehoben. Dann folgt weiterhin bevorzugt ein gegenläufiges Verschwenken des Schrägförderers zum Boden, bis der einzustellende Schnittwinkel, vorzugsweise in einer definierten Höhe, insbesondere in der Ausgangshöhe, des Vorsatzgerätes, erreicht ist. Bei einer erforderlichen Vergrößerung des Schnittwinkels werden die beiden Verfahrensschritte hingegen bevorzugt in umgekehrter Reihenfolge ausgeführt. Dabei wird das Maschinengehäuse bevorzugt zunächst abgesenkt, um anschließend den Schrägförderer um die Schwenkachse vom Boden weg zu verschwenken. Auch ein gleichzeitiger Ablauf beider Verfahrensschritte ist denkbar.

In einer besonders bevorzugten Ausführungsform wird der Schnittwinkel des Vorsatzgerätes in der weiteren Regelstrategie in einem ebenen Gelände eingestellt, insbesondere in dem kein Hangausgleich erforderlich ist. Bevorzugt befindet sich dazu der zumindest eine Radstellzylinder der Hangausgleichseinrichtung vor Einstellung des Schnittwinkels in einer ersten Zylinderstellung. Dabei ist die erste Zylinderstellung eine Ausgangsstellung. Durch die Druckbeaufschlagung oder -Entlastung des zumindest einen Radstellzylinders wird dieser von der ersten Zylinderstellung in eine zweite Zylinderstellung verstellt. In beiden Zylinderstellungen sind zumindest die beiden an der Frontachse angeordneten Räder bevorzugt im Wesentlichen um den gleichen Betrag vom Maschinengehäuse beabstandet.

In einer bevorzugten Ausführungsform wird die zweite Zylinderstellung des Radstellzylinders als ein Initialwert für den Hangneigungsausgleich bei der ersten Regelstrategie verwendet. Vorzugsweise wird er dafür gespeichert. Dabei bildet der Initialwert einen Offset-Wert für den Hangneigungsausgleich, um den der Hangneigungsausgleich zumindest in eine Schwenkrichtung der Schwenkeinrichtung reduziert ist.

Beide Regelstrategien werden bevorzugt von einer Steuer- und Regeleinrichtung durchgeführt, welche der Erntemaschine zugeordnet ist. Die Steuer- und Regeleinrichtung ist dabei dazu eingerichtet, den Druck in dem zumindest einen Radstellzylinder und dem zumindest einen Hubzylinder zu steuern.

Die Auswahl der Regelstrategie erfolgt automatisch durch die Steuer- und Regeleinrichtung. Bei der automatischen Auswahl der Regelstrategie erfolgt die Auswahl nach Eingabe des Schnittwinkels, insbesondere in Abhängigkeit von einem detektierten Abstand des Vorsatzgerätes vom Boden und/oder der Erntegutart und/oder einer detektierten Hangneigung. Die Hangneigung kann dabei bevorzugt über Neigungssensoren gemessen und an die Steuer- und Regeleinrichtung übermittelt werden.

Die Aufgabe wird weiterhin gelöst mit einer selbstfahrenden Erntemaschine, die dazu eingerichtet ist, dass Verfahren durchzuführen. Indem der Schnittwinkel in Abhängigkeit von den Bodenverhältnissen und/oder der Erntegutart angepasst wird, lassen sich der Erntegutertrag und der Erntegutdurchsatz der Erntemaschine optimieren. Durch Einstellung des Schnittwinkels mittels des zumindest einen Radstellzylinders und gegebenenfalls des zumindest einen Hubzylinders sind keine weiteren Stellzylinder zum Verschwenken des Vorsatzgerätes um eine quer zur Fahrtrichtung verlaufende Querachse erforderlich. Dadurch können die Kosten für die Erntemaschine und der Herstellungsaufwand reduziert werden.

Im Folgenden wird die Erfindung anhand von Figuren beschrieben. Die Figuren sind lediglich beispielhaft und schränken den allgemeinen Erfindungsgedanken nicht ein. Es zeigen:
- Figur 1 :: einen vorderen Bereich einer selbstfahrenden Erntemaschine in Form eines selbstfahrenden Mähdreschers;
- Figur 2 :: in (a) und (b) das Einstellen eines Schnittwinkels eines Vorsatzgerätes schematisch, wobei (a) ein Verschwenken eines Maschinengehäuses, und in (b) ein Verschwenken eines Schrägförderers zeigen; und
- Figur 3 :: schematisch eine erste und eine weitere Regelstrategie zum Betreiben einer Hangausgleichseinrichtung.

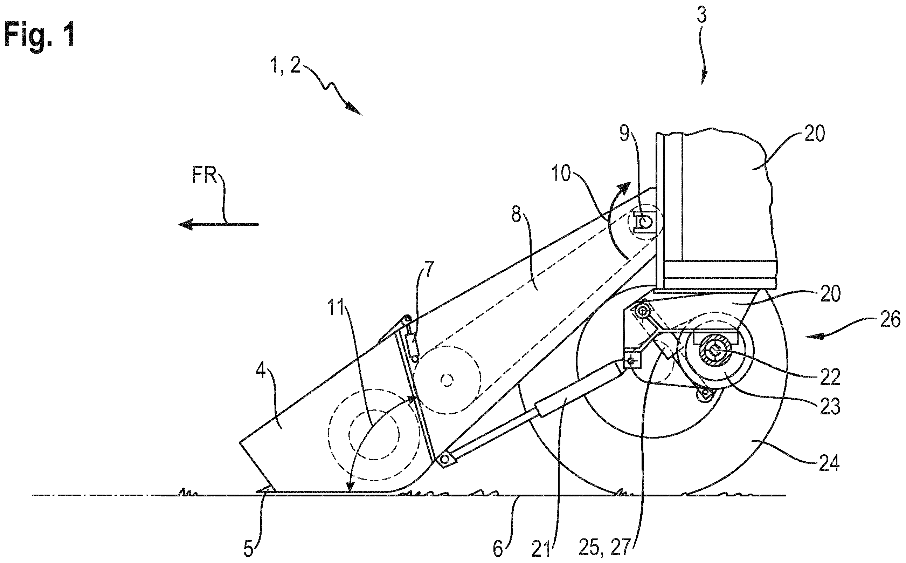

Figur 1 zeigt schematisch einen Teilausschnitt einer an sich bekannten und hier nicht näher beschriebenen selbstfahrenden Erntemaschine 1. Die selbstfahrende Erntemaschine 1 ist hier als Mähdrescher 2 ausgeführt. Die Erfindung betrifft aber auch andere selbstfahrende Erntemaschinen, beispielsweise einen Feldhäcksler (nicht gezeigt). Die Begriffe
Erntemaschine 1 und Mähdrescher 2 werden im Folgenden synonym verwendet. Dargestellt ist eine Seitenansicht einer Front 3 des Mähdreschers 2.

Der Mähdrescher 2 weist ein Vorsatzgerät 4 auf. An dem Vorsatzgerät 4 ist ein Schneidwerk 5 angeordnet. Das Schneidwerk 5 ist parallel zu einer bodenseitigen Fläche des Vorsatzgerätes 4 angeordnet. Da der Schnittwinkel 12 des Schneidwerks 5 und der Schnittwinkel 12 des Vorsatzgerätes 4 in diesem Beispiel identisch sind, wird im Folgenden nur auf den Schnittwinkel 12 verwiesen.

Das Vorsatzgerät 4 ist an einem Schrägförderer 8 angeordnet. Es ist mittels mindestens eines Stellgliedes 7 um eine Längsachse (nicht dargestellt), welche in Fahrtrichtung FR ausgerichtet ist drehbar. Das Vorsatzgerät 4 ist hier hingegen in einem Montagewinkel 11 drehfest am Schrägförderer 8 angeordnet, sodass es sich in eine Querrichtung quer zur Fahrtrichtung FR erstreckt.

Der Schrägförderer 8 ist in und gegen eine Schwenkrichtung 10 schwenkbar um eine Schwenkachse 9 an einem Maschinengehäuse 20 der Erntemaschine 1 angeordnet. Zwischen dem Schrägförderer 8 und dem Maschinengehäuse 20 sind zwei Hubzylinder 21 vorgesehen, mit denen der Schrägförderer 8 um die Schwenkachse verschwenkbar ist. Die Hubzylinder 21 werden zum Verschwenken des Schrägförderers 8 druckbeaufschlagt oder - entlastet.

Die Erntemaschine 1 weist eine Frontachse 22 auf. An der Frontachse 22 ist an beiden gegenüber liegenden Achsenden jeweils eine Schwenkeinrichtung (nicht bezeichnet) vorgesehen. Die Schwenkeinrichtungen umfassen jeweils ein Portalgetriebe 23 sowie einen dem Portalgetriebe 23 zugeordneten Radstellzylinder 25. Am Portalgetriebe 23 ist je ein Rad 24 der Erntemaschine angeordnet. Die Räder 24 sind jeweils mittels des Radstellzylinders 25 des Portalgetriebes 23, dem sie zugeordnet sind, um die Frontachse 22 verschwenkbar. Dabei ist das Maschinengehäuse 20 so an den Schwenkeinrichtungen, insbesondere den Radstellzylindern 25, gelagert, dass es bei einem Verschwenken zumindest eines der Räder 24 um die Frontachse 22 angehoben oder abgesenkt wird.

Die Schwenkeinrichtungen jeweils mit ihrem Radstellzylinder 25 und ihrem Protalgetriebe 23 sind Teil einer Hangausgleichseinrichtung 26 gemäß EP 1 321 026 B1, deren Inhalt hiermit vollumfänglich Bestandteil der Offenbarung dieser Patentanmeldung wird, sodass im Folgenden die Vorrichtungen und das Verfahren der Hangausgleichseinrichtung 26 nicht nochmals beschrieben werden. Die Radstellzylinder 25 und Hubzylinder 21 sind hier jeweils als Hydraulikzylinder ausgebildet. Sie können alternativ auch als pneumatische Zylinder oder als Elektromotoren ausgebildet sein.

Zudem umfasst der Mähdrescher 2 eine Steuer- und Regeleinrichtung (nicht dargestellt). Die Steuer- und Regeleinrichtung ist dazu eingerichtet, die Hangausgleichseinrichtung 26 in einer ersten Regelstrategie A und in einer weiteren Regelstrategie B zu betreiben, wobei in der ersten Regelstrategie Ader Hangneigungsausgleich 33, und in der weiteren Regelstrategie B die Einstellung des Schnittwinkels 12 bewirkt wird. Basierend auf der ausgewählten Regelstrategie A, B steuert die Steuer- und Regeleinrichtung die Radstellzylinder 25 und/oder Hubzylinder 21.

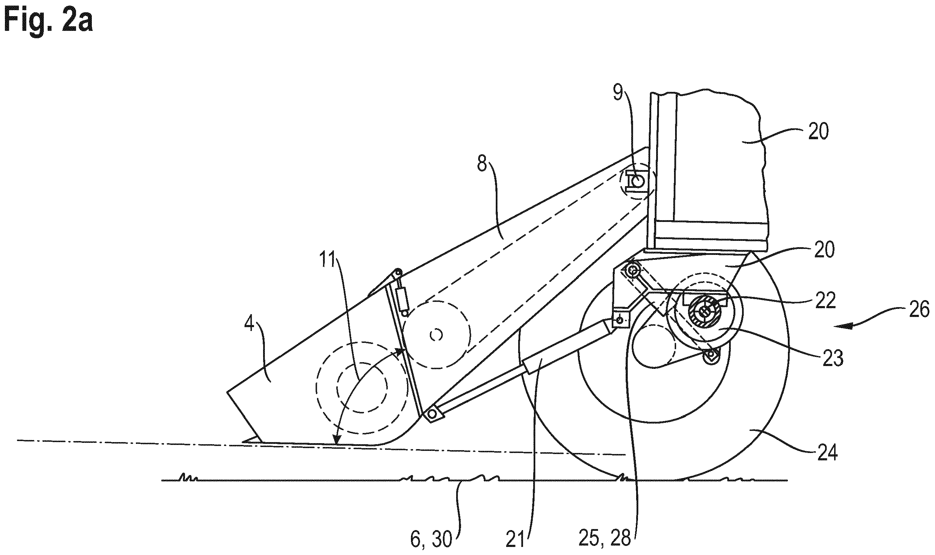

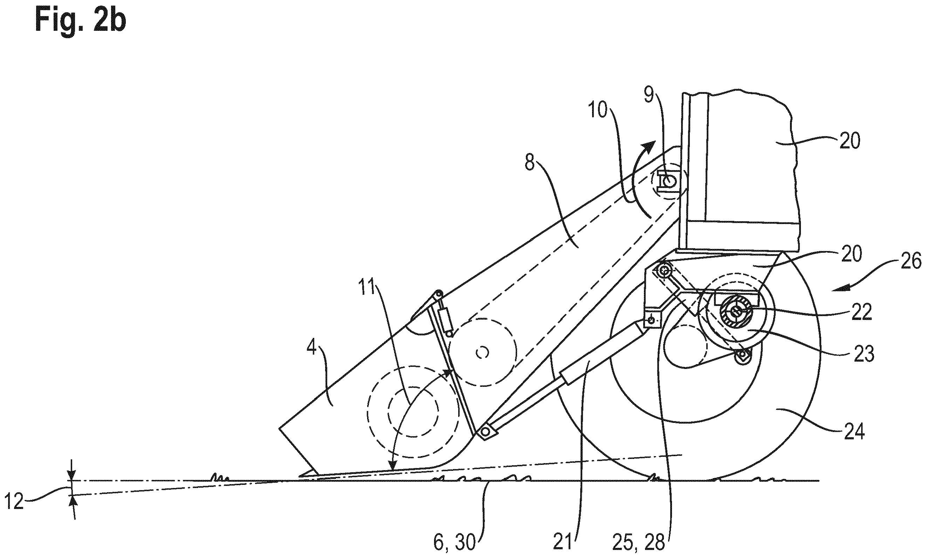

Figur 2 (a) und (b) zeigen exemplarisch die Einstellung des Schnittwinkels 12 des Vorsatzgerätes 4 in einem ebenen Gelände 30 gemäß der weiteren Regelstrategie B. Sämtliche Höhen und Winkel werden dabei relativ zum Boden 6 verstellt.

Das Vorsatzgerät 4 wird von einem ersten Schnittwinkel 12 (0°) auf einen zweiten Schnittwinkel 12 (<0°) verstellt. Der zweite Schnit twinkel 12 ist in diesem Beispiel negativ. Das Verstellen der Radstellzylinder 25 und Hubzylinder 21 erfolgt auf beiden Seiten des Mähdreschers 2 in identischer Weise.

In einem ersten Verfahrensschritt der weiteren Regelstrategie B wird das Maschinengehäuse 20 mittels der Hangausgleichseinrichtung 26 verschwenkt (siehe Figur 2 (a)). Dabei wird die Front 3 des Mähdreschers 2 angehoben. Durch Verschwenken des Maschinengehäuses 20 werden der an ihm angeordnete Schrägförderer 8 und das am Schrägförderer 8 angeordnete Vorsatzgerät 4 ebenfalls verschwenkt. Eine Höhe (nicht bezeichnet) des Vorsatzgerätes 4 und sein Schnittwinkel 12 zum Boden werden dadurch vergrößert.

Das Verschwenken des Maschinengehäuses 20 erfolgt mittels Druckbeaufschlagung der Radstellzylinder 25 der Hangausgleichseinrichtung 26. Dabei werden die Radstellzylinder 25 von einer ersten Zylinderstellung 27, insbesondere einer Ausgangsstellung, in eine zweite Zylinderstellung 28 verstellt. Dadurch werden die Räder 24 jeweils um die Frontachse 22 verschwenkt. Ein Radabstand (nicht bezeichnet) der Räder 24 zum Maschinengehäuse 20 wird dadurch vergrößert.

Figur 2 (b) zeigt einen zweiten Verfahrensschritt der weiteren Regelstrategie B. Der Schrägförderer 8 mit dem Vorsatzgerät 4 werden entgegen der Schwenkrichtung 10 von einer Grundstellung in eine Endstellung zum Boden 6 hin verschwenkt. Zum Verschwenken des Schrägförderers 8 mit dem Vorsatzgerät 4 entgegen der Schwenkrichtung 10 wird der Hubzylinder 21 druckentlastet. Dabei verringern sich der Schnittwinkel 12 und die Höhe des Vorsatzgerätes 4. Dadurch erfolgt eine Feineinstellung des Schnittwinkels 12, die hier überzeichnet dargestellt ist. Der Schnittwinkel 12 wird dabei präzise eingestellt. Der Schnittwinkel 12 weist hier nun den negativen Betrag auf. In der Endstellung weist das Vorsatzgerät 4 hier zudem die gleiche Höhe auf wie in der Ausgangsstellung der Radstellzylinder 25 vor dem Ausführen des ersten Verfahrensschrittes der weiteren Regelstrategie B.

Die hier gewählte Reihenfolge der Verfahrensschritte eignet sich zur Reduzierung des Schnittwinkels 12. Eine Erhöhung des Schnittwinkels 12 erfolgt, indem die Verfahrensschritte in umgekehrter Reihenfolge durchgeführt und die Richtungen umgekehrt werden.

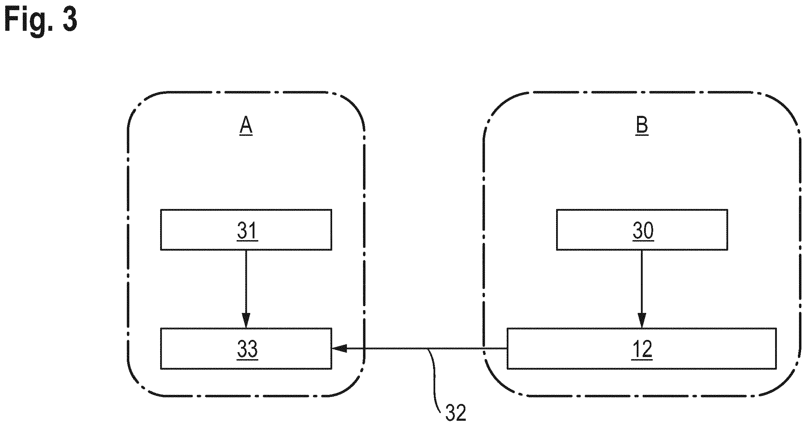

Figur 3 verdeutlicht schematisch die beiden Regelstrategien A, B, gemäß derer die Hangausgleichseinrichtung 26 betreibbar ist.

Mit der weiteren Regelstrategie B wird im ebenen Gelände 30 der Schnittwinkel 12 durch Verschwenken des Maschinengehäuses 20 und des Schrägförderers 8 eingestellt. Dies sollte vor einem Befahren eines unebenen Geländes erfolgen.

Die erste Regelstrategie A wird zum Hangneigungsausgleich 33 bei einer querseitigen Neigung am Hang 31 durchgeführt. Dabei wird die zweite Zylinderstellung der Radstellzylinder 25 als Initialwert 32 für das Verstellen der Radstellzylinder 25 gemäß der ersten Regelstrategie verwendet. Der Initialwert 32 dient bei der ersten Regelstrategie A somit als Startwert beim Ausgleich der Hangneigung. Von ihm ausgehend werden weitere Zylinderstellungen zum Hangneigungsausgleich 33 eingestellt.

Die Hangausgleichseinrichtung 26 ist gemäß der zwei Regelstrategien A, B betreibbar. Dabei wird sie bei der ersten Regelstrategie A zum Hangneigungsausgleich 33, insbesondere in unebenem Gelände oder am Hang, und bei der weiteren Regelstrategie B zur Einstellung des Schnittwinkels 12, insbesondere in ebenem Gelände, genutzt.

### Bezugszeichenliste:

- 1: Erntemaschine
- 2: Mähdrescher
- 3: Front des Mähdreschers und des Maschinengehäuses
- 4: Vorsatzgerät
- 5: Schneidwerk
- 6: Boden
- 7: Stellglied
- 8: Schrägförderer
- 9: Schwenkachse
- 10: Schwenkrichtung
- 11: Montagewinkel
- 12: Schnittwinkel
- 20: Maschinengehäuse
- 21: Hubzylinder zum Verschwenken des Schrägförderers
- 22: Starre Frontachse
- 23: Portalgetriebe
- 24: Rad
- 25: Radstellzylinder
- 26: Hangausgleichseinrichtung
- 27: Erste Zylinderstellung des Radstellzylinders
- 28: Zweite Zylinderstellung des Radstellzylinders
- 30: Ebenes Gelände
- 31: Hang
- 32: Initialwert
- 33: Hangneigungsausgleich
- A: Erste Regelstrategie
- B: Weitere Regelstrategie
- FR: Fahrtrichtung

## Patentansprüche

1. Verfahren zum Einstellen eines Schnittwinkels (12) eines an einer selbstfahrenden Erntemaschine (1), vorzugsweise einem Mähdrescher (2), angeordneten Vorsatzgerätes (4), wobei das Vorsatzgerät (4) um eine in Fahrtrichtung ausgerichtete Längsachse drehbar und in eine Querrichtung quer zur Fahrrichtung drehfest in einem Montagewinkel an einem Schrägförderer (8) angeordnet ist, wobei das Vorsatzgerät (4) mit dem Boden (6) einen Schnittwinkel (12) einschließt, und die Erntemaschine (1) zumindest eine zumindest einen Radstellzylinder (25) umfassende Hangausgleichseinrichtung (26) zum Hangneigungsausgleich, bei dem ein Maschinengehäuse (20) der Erntemaschine (1) verschwenkt wird, und zumindest einen zwischen dem Maschinengehäuse (20) und dem Schrägförderer (8) angeordneten Hubzylinder (21) zum Verschwenken des Schrägförderers (8) umfasst, wobei die Hangausgleichseinrichtung (26) in einer ersten Regelstrategie (A) und in einer weiteren Regelstrategie (B) betrieben wird, wobei die Hangausgleichseinrichtung (26) in der ersten Regelstrategie (A) zum Hangneigungsausgleich (33), und in der weiteren Regelstrategie (B) zur Einstellung des Schnittwinkels (12) genutzt wird, wobei die Druckbeaufschlagung oder - Entlastung des zumindest einen Radstellzylinders (25) in der weiteren Regelstrategie (B) eine Änderung der Höhe des Vorsatzgerätes (4) und eine Änderung des Schnittwinkels (12) bewirkt und die weitere Regelstrategie (B) eine schnitthöhenunabhängige oder eine im Wesentlichen schnitthöhenunabhängige Einstellung des Schnittwinkels (12) unter Ausnutzung der Hangausgleichseinrichtung (26) vorsieht, **dadurch gekennzeichnet,**
**dass** die Hangausgleichseinrichtung (26) den zumindest einen Radstellzylinder (25) und zumindest ein Portalgetriebe (23) umfasst und
**dass** eine Auswahl der Regelstrategie (A, B) automatisch durch eine Steuer- und Regeleinrichtung erfolgt, wobei bei der automatischen Auswahl der Regelstrategie (A, B) die Auswahl nach Eingabe des Schnittwinkels (12) erfolgt.

2. Verfahren nach Anspruch 1, **dadurch gekennzeichnet, dass** die Hangausgleichseinrichtung (26), welche den zumindest einen Radstellzylinder (25) und das zumindest eine Portalgetriebe (23) umfasst, in der ersten Regelstrategie (A) durch Druckbeaufschlagung oder -Entlastung des zumindest einen Radstellzylinders (25) einen Ausgleich einer querseitigen Hangneigung durch ein Anheben oder Absenken des Maschinengehäuses (20) ermöglicht.

3. Verfahren nach einem der vorherigen Ansprüche, **dadurch gekennzeichnet, dass** die Einstellung des Schnittwinkels (12) des Vorsatzgerätes (4), insbesondere während oder nach dem Hangneigungsausgleich (33), durch Druckbeaufschlagung- oder -Entlastung des den Schrägförderer (8) verschwenkenden zumindest einen Hubzylinders (21) bewirkt wird.

4. Verfahren nach einem der vorherigen Ansprüche, **dadurch gekennzeichnet, dass** die erste Regelstrategie (A) in einem unebenen Gelände (30), insbesondere am Hang, genutzt wird.

5. Verfahren nach einem der vorherigen Ansprüche, **dadurch gekennzeichnet, dass** eine Feineinstellung des Schnittwinkels (12) in der weiteren Regelstrategie (B) durch Druckbeaufschlagung oder -Entlastung des zumindest einen den Schrägförderer (8) verschwenkenden Hubzylinders (21) bewirkt wird.

6. Verfahren nach einem der vorhergehenden Ansprüche, **dadurch gekennzeichnet, dass** die weitere Regelstrategie (B) in einem ebenen Gelände (30) genutzt wird.

7. Verfahren nach einem der vorhergehenden Ansprüche, **dadurch gekennzeichnet, dass** die Hangausgleichseinrichtung (26) zuerst in der weiteren Regelstrategie (B), insbesondere in ebenem Gelände (30), zur Einstellung des Schnittwinkels (12) genutzt wird, und dann in der ersten Regelstrategie (A) zum Hangneigungsausgleich (33), insbesondere in unebenem Gelände oder am Hang (31).

8. Verfahren nach einem der vorhergehenden Ansprüche, **dadurch gekennzeichnet, dass** der zumindest eine Radstellzylinder (25) in der weiteren Regelstrategie (B) von einer ersten Zylinderstellung (27) in eine zweite Zylinderstellung (28) bewegt wird.

9. Verfahren nach Anspruch 8, **dadurch gekennzeichnet, dass** die zweite Zylinderstellung (28) des Radstellzylinders (25) als ein Initialwert (32) für den Hangneigungsausgleich (33) verwendet wird.

10. Selbstfahrende Erntemaschine (1), insbesondere Mähdrescher (2), mit einem an einem Schrägförderer (8) angeordneten Vorsatzgerät (4), wobei das Vorsatzgerät (4) um eine in Fahrtrichtung ausgerichtete Längsachse drehbar und in eine Querrichtung quer zur Fahrrichtung drehfest in einem Montagewinkel an dem Schrägförderer (8) angeordnet ist, wobei das Vorsatzgerät (4) mit dem Boden (6) einen Schnittwinkel (12) einschließt, und die Erntemaschine (1) zumindest eine zumindest einen Radstellzylinder (25) und zumindest ein Portalgetriebe (23) umfassende Hangausgleichseinrichtung (26) zum Hangneigungsausgleich, bei dem ein Maschinengehäuse (20) der Erntemaschine (1) verschwenkt wird, und zumindest einen zwischen dem Maschinengehäuse (20) und dem Schrägförderer (8) angeordneten Hubzylinder (21) zum Verschwenken des Schrägförderers (8) und eine Steuer- und Regeleinrichtung umfasst, **dadurch gekennzeichnet, dass** die Erntemaschine (1) dazu eingerichtet ist, das Verfahren nach einem der vorherigen Ansprüche durchzuführen.

## Claims

1. A method for adjusting a cutting angle (12) for a header (4) disposed on a self-propelled harvesting machine (1), preferably a combine harvester (2), wherein the header (4) can be rotated about a longitudinal axis orientated in the direction of travel and is fixed against rotation in a transverse direction which is transverse to the direction of travel at a mounting angle on an inclined conveyor (8), wherein the header (4) makes a cutting angle (12) with the ground (6) and the harvesting machine (1) comprises at least one slope compensation device (26) comprising at least one wheel positioning cylinder (25) to compensate for the inclination of the slope, by means of which a machine housing (20) of the harvesting machine (1) is pivoted, and at least one lifting cylinder (21) disposed between the machine housing (20) and the inclined conveyor (8) to pivot the inclined conveyor (8), wherein the slope compensation device (26) is operated in a first control strategy (A) and in a further control strategy (B), wherein in the first control strategy (A), the slope compensation device (26) is used to compensate for the inclination of the slope, and in the further control strategy (B) for adjusting the cutting angle (12), wherein the pressurization or decompression of the at least one wheel positioning cylinder (25) in the further control strategy (B) causes a variation in the height of the header (4) and a variation of the cutting angle (12) and the further control strategy (B) adjusts the cutting angle (12) independently of the cutting height or essentially independently of the cutting height by utilizing the slope compensation device (26), **characterized in that** the slope compensation device (26) comprises the at least one wheel positioning cylinder (25) and at least one portal gear (23) and **in that** selection of the control strategy (A, B) is carried out automatically by means of a management and control device, wherein during automatic selection of the control strategy (A, B), the selection is carried out after inputting the cutting angle (12).

2. The method according to claim 1, **characterized in that** in the first control strategy (A), the slope compensation device (26) which comprises the at least one wheel positioning cylinder (25) and the at least one portal gear (23) enables a compensation for a transverse slope inclination by lifting or lowering the machine housing (20) by means of pressurization or decompression of the at least one wheel positioning cylinder (25).

3. The method according to one of the preceding claims, **characterized in that** the adjustment of the cutting angle (12) of the header (4), in particular during or after the slope inclination compensation (33) is carried out by means of pressurization or decompression of the at least one lifting cylinder (21) which pivots the inclined conveyor (8).

4. The method according to one of the preceding claims, **characterized in that** the first control strategy (A) is used on uneven terrain (30), in particular on a slope.

5. The method according to one of the preceding claims, **characterized in that** a fine adjustment of the cutting angle (12) in the further control strategy (B) is carried out by pressurization or decompression of the at least one lifting cylinder (21) which pivots the inclined conveyor (8).

6. The method according to one of the preceding claims, **characterized in that** the further control strategy (B) is employed on even terrain (30).

7. The method according to one of the preceding claims, **characterized in that** the slope compensation device (26) is initially employed in the further control strategy (B), in particular on even terrain (30), to adjust the cutting angle (12), and then in the first control strategy (A) for slope inclination compensation (33), in particular on uneven terrain or on a slope (31).

8. The method according to one of the preceding claims, **characterized in that** the at least one wheel positioning cylinder (25) in the further control strategy (B) is moved from a first cylinder position (27) to a second cylinder position (28).

9. The method according to claim 8, **characterized in that** the second cylinder position (28) of the wheel positioning cylinder (25) is used as an initial value (32) for the slope inclination compensation (33).

10. A self-propelled harvesting machine (1), in particular a combine harvester (2), with a header (4) disposed on an inclined conveyor (8), wherein the header (4) can be rotated about a longitudinal axis orientated in the direction of travel and is fixed against rotation in a transverse direction which is transverse to the direction of travel at a mounting angle on the inclined conveyor (8), wherein the header (4) makes a cutting angle (12) with the ground (6) and the harvesting machine (1) comprises at least one slope compensation device (26) comprising at least one wheel positioning cylinder (25) and at least one portal gear (23) to compensate for the inclination of the slope, by means of which a machine housing (20) of the harvesting machine (1) is pivoted, and at least one lifting cylinder (21) disposed between the machine housing (20) and the inclined conveyor (8) to pivot the inclined conveyor (8) and a management and control device, **characterized in that** the harvesting machine (1) is configured to carry out the method according to one of the preceding claims.

## Revendications

1. Procédé pour régler un angle de coupe (12) d'un outil frontal (4) disposé sur une machine de récolte automotrice (1), de préférence sur une moissonneuse-batteuse (2), l'outil frontal (4) étant disposé de manière tournante autour d'un axe longitudinal orienté dans le sens de la marche et, dans une direction transversale au sens de la marche, de manière solidaire en rotation sur un convoyeur incliné (8) dans un angle de montage, l'outil frontal (4) formant avec le sol (6) un angle de coupe (12), et la machine de récolte (1) comprenant au moins un équipement de compensation de dévers (26) englobant au moins un vérin de réglage de roue (25) pour compenser le dévers, avec lequel un carter de machine (20) de la machine de récolte (1) est pivoté, et au moins un vérin hydraulique (21) disposé entre le carter de machine (20) et le convoyeur incliné (8) pour pivoter le convoyeur incliné (8), l'équipement de compensation de dévers (26) étant opéré dans une première stratégie de régulation (A) et dans une autre stratégie de régulation (B), l'équipement de compensation de dévers (26) étant exploité dans la première stratégie de régulation (A) pour la compensation de dévers (33) et, dans l'autre stratégie de régulation (B) pour le réglage de l'angle de coupe (12), la compression ou la décompression du au moins un vérin de réglage de roue (25) dans l'autre stratégie de régulation (B) provoquant une modification de la hauteur de l'outil frontal (4) et une modification de l'angle de coupe (12), et l'autre stratégie de régulation (B) prévoyant un réglage de l'angle de coupe (12) indépendant de la hauteur de coupe ou sensiblement indépendant de la hauteur de coupe en utilisant l'équipement de compensation de dévers (26), **caractérisé en ce que** l'équipement de compensation de dévers (26) comprend le au moins un vérin de réglage de roue (25) et au moins un réducteur (23), et **en ce qu'**un choix de stratégie de régulation (A, B) s'effectue automatiquement par l'intermédiaire de l'équipement de commande et de régulation, lors du choix automatique de la stratégie de régulation (A, B) le choix s'effectuant après entrée de l'angle de coupe (12).

2. Procédé selon la revendication 1, **caractérisé en ce que** l'équipement de compensation de dévers (26), qui comprend le au moins un vérin de réglage de roue (25) et le au moins un réducteur (23), permet dans la première stratégie de régulation (A), par compression ou décompression du au moins un vérin de réglage de roue (25), de compenser un dévers transversal par levage ou abaissement du carter de machine (20).

3. Procédé selon une des revendications précédentes, **caractérisé en ce que** le réglage de l'angle de coupe (12) de l'outil frontal (4), en particulier pendant ou après la compensation de dévers (33), est réalisé par compression ou décompression du au moins un vérin hydraulique (21) pivotant le convoyeur incliné (8).

4. Procédé selon une des revendications précédentes, **caractérisé en ce que** la première stratégie de régulation (A) est utilisée sur terrain ondulé (30), en particulier en pente.

5. Procédé selon une des revendications précédentes, **caractérisé en ce qu'**un réglage précis de l'angle de coupe (12) dans l'autre stratégie de régulation (B) est réalisé par compression ou décompression du au moins un vérin hydraulique (21) pivotant le convoyeur incliné (8).

6. Procédé selon une des revendications précédentes, **caractérisé en ce que** l'autre stratégie de régulation (B) est utilisée sur terrain plat (30) .

7. Procédé selon une des revendications précédentes, **caractérisé en ce que** l'équipement de compensation de dévers (26) est utilisé d'abord dans l'autre stratégie de régulation (B), en particulier sur terrain plat (30), pour régler l'angle de coupe (12) et ensuite dans la première stratégie de régulation (A) pour la compensation de dévers (33), en particulier sur terrain ondulé ou en pente (31).

8. Procédé selon une des revendications précédentes, **caractérisé en ce que**, dans l'autre stratégie de régulation (B), le au moins un vérin de réglage de roue (25) est déplacé depuis une première position de vérin (27) vers une seconde position de vérin (28).

9. Procédé selon la revendication 8, **caractérisé en ce que** la seconde position de vérin (28) du vérin de réglage de roue (25) est utilisée comme valeur initiale (32) pour la compensation de dévers (33) .

10. Machine de récolte automotrice (1), en particulier moissonneuse-batteuse (2), comprenant un outil frontal (4) disposé sur un convoyeur incliné (8), l'outil frontal (4) étant disposé de manière tournante autour d'un axe longitudinal orienté dans le sens de la marche et, dans une direction transversale au sens de la marche, de manière solidaire en rotation sur le convoyeur incliné (8) dans un angle de montage, l'outil frontal (4) formant avec le sol (6) un angle de coupe (12), et la machine de récolte (1) comprenant au moins un équipement de compensation de dévers (26) englobant au moins un vérin de réglage de roue (25) et au moins un réducteur (23) pour compenser le dévers, avec lequel un carter de machine (20) de la machine de récolte (1) est pivoté, et au moins un vérin hydraulique (21) disposé entre le carter de machine (20) et le convoyeur incliné (8) pour pivoter le convoyeur incliné (8), et un équipement de commande et de régulation, **caractérisée en ce que** la machine de récolte (1) est agencée pour mettre en oeuvre le procédé selon une des revendications précédentes.
